# FASCICULE DE BREVET EUROPEEN

(11) **EP 1 015 301 B1**
(45) Date de publication et mention de la délivrance du brevet: **09.01.2002**
(21) Numéro de dépôt: 98945361.8
(22) Date de dépôt: 23.09.1998
(51) Int. Cl.: B62K 19/16, B62K 21/02, B29C 53/82, B29C 53/58

(54) **PIVOT DE FOURCHE DE BICYCLETTE, ET FOURCHE DE BICYCLETTE EQUIPEE D'UN TEL PIVOT**
FAHRRADGABEL
BICYCLE FORK PIVOT, AND BICYCLE FORK EQUIPPED WITH SAME

(30) Priorité: 24.09.1997 FR 9711881
(43) Date de publication de la demande: 05.07.2000
(73) Titulaire: TIME SPORT INTERNATIONAL, 58649 Varennes-Vauzelles (FR)
(72) Inventeur: GUEUGNEAUD, Jean-Marc, F-38110 Saint Clair de la Tour (FR)
(74) Mandataire: Michardière, Bernard
(86) Numéro de dépôt international: FR9802037
(87) Numéro de publication internationale: WO9915395

(56) Documents cités:
- EP-A- 0 352 663
- FR-A- 2 684 062
- US-A- 5 059 057
- US-A- 5 411 463
- US-A- 5 435 869

## Description

L'invention est relative à un pivot tubulaire de fourche de bicyclette comportant une paroi cylindrique admettant un axe géométrique longitudinal.

On sait que pour une bicyclette, notamment de compétition, le poids constitue un élément important, en particulier lors de parcours accidentés ou montagneux. On a donc cherché à alléger le poids d'ensemble en diminuant le poids de différents éléments composant la bicyclette. Il faut cependant qu'une telle diminution de poids ne s'accompagne pas d'une diminution inacceptable de la résistance mécanique de l'élément de bicyclette concerné.

La société déposante a ainsi mis au point une fourche de bicyclette en matériau composite, selon le brevet FR-B-2 684 062, déposé le 25 novembre 1991, qui donne toute satisfaction et qui est largement utilisée dans les compétitions cyclistes de très haut niveau.

On rappelle qu'on désigne par matériau composite un matériau constitué de fibres à haute résistance mécanique, notamment de fibres de carbone et/ou de fibres de verre, se présentant généralement sous forme de nappes, et qui lors d'une opération de moulage sont noyées dans une résine du type époxy ou de type polyester, ou équivalent, qui durcit.

Cette fourche de l'art antérieur est combinée avec un pivot de fourche métallique pour présenter les caractéristiques de résistance souhaitées. Toutefois, ce pivot de fourche métallique, généralement réalisé en acier allié, alourdit l'ensemble.

Des essais ont été effectués pour réaliser le pivot de fourche en matériau composite en vue d'un gain de poids. Ces essais ont montré que les performances globales de la fourche équipée d'un tel pivot sont en régression aussi bien en ce qui concerne la résistance frontale ( c'est-à-dire la résistance aux efforts de freinage et à des chocs longitudinaux de roulement dus aux inégalités de la surface de roulage ), qu'en ce qui concerne la résistance latérale (c'est-à-dire la résistance à des efforts transversaux, notamment lorsque le cycliste pédale en danseuse).

Le dimensionnement du pivot, en particulier son diamètre extérieur, est conditionné par les accessoires qui viennent s'assembler dessus. C'est le cas de la cuvette de roulement du jeu de direction, d'un diamètre de 26,5 mm normalisé. C'est aussi le cas des potences de type "non filetées" d'un diamètre d'alésage de 25,4 mm qui, à la différence des potences fixées dans le tube de pivot par un expandeur se bloquant à l'intérieur du tube de pivot, viennent entourer la surface extérieure de la paroi cylindrique du pivot et se bloquent par serrage autour de cette paroi.

Le volume intérieur du pivot tubulaire étant libre, puisque la potence n'y est plus logée, on a essayé d'augmenter l'épaisseur de la paroi cylindrique du pivot réalisé en matériau composite, vers l'intérieur, en vue d'obtenir des performances équivalentes à celles d'un pivot métallique.

Les résultats obtenus avec un tel pivot en matériau composite à paroi plus épaisse ne sont pas satisfaisants.

On connaît par ailleurs, d'après US-A-5 059 057, des tubes en matière plastique renforcés à l'intérieur par une matrice constituée de parois radiales. Ces tubes ne sont pas particulièrement prévus pour former un pivot de fourche de bicyclette, ni pour satisfaire aux exigences d'un tel pivot. De plus, ces tubes sont fabriqués par extrusion, ce qui ne permet pas de mettre en oeuvre un matériau composite avec nappes de fibres noyées dans une résine durcie, qui nécessite un moulage.

L'invention a pour but, surtout, de fournir un pivot de fourche de bicyclette qui, tout en étant plus léger que les pivots métalliques classiques, permet d'obtenir des performances de résistance mécanique au moins équivalentes à celles des pivots métalliques.

Il est souhaitable, en outre, qu'un tel pivot reste d'une fabrication relativement simple, et aussi économique que possible.

Selon l'invention, un pivot tubulaire de fourche de bicyclette comportant une paroi cylindrique admettant un axe géométrique longitudinal est caractérisé par le fait qu'il est réalisé en un matériau composite constitué de fibres à haute résistance mécanique sous forme de nappes et qui ont été noyées, lors d'une opération de moulage, dans une résine qui a durci, et qu'il comporte au moins une cloison longitudinale interne de renforcement.

Avantageusement, le pivot comporte une cloison parallèle au plan de roulement de la bicyclette (plan médiateur de la fourche), cette cloison étant propre à reprendre les contraintes frontales, et une cloison orthogonale à la précédente propre à reprendre les contraintes latérales.

De préférence chaque cloison longitudinale interne passe sensiblement par l'axe géométrique longitudinal du pivot.

Le pivot comporte de préférence au moins une cloison longitudinale s'étendant suivant un diamètre.

Le pivot peut comporter plusieurs cloisons longitudinales radiales réparties angulairement autour de l'axe géométrique et s'étendant sensiblement entre cet axe et la paroi cylindrique, ces cloisons étant liées entre elles dans la zone de l'axe géométrique longitudinal.

Deux cloisons radiales successives constituent avantageusement les faces sensiblement planes d'un prisme élémentaire à section transversale en forme de secteur circulaire , ce prisme ayant une face extérieure convexe.

Chaque prisme est constitué par des nappes de fibres enroulées suivant le contour du secteur correspondant .

Le nombre des cloisons radiales peut être pair, les cloisons radiales étant sensiblement diamétralement opposées et alignées deux à deux, un groupe de deux parois radiales ainsi alignées formant une cloison diamétrale.

Un enroulement cylindrique extérieur de nappes de fibres entoure les faces convexes des prismes élémentaires.

Le pivot peut être solidaire d'un insert en matériau composite , en forme de U retourné, pour liaison avec la tête de fourche . Cet insert peut comporter également au moins une cloison interne de renforcement.

La fabrication du pivot est avantageusement effectuée autour d'un mandrin ou d'un noyau fendu en croix dans la zone de réalisation des cloisons. Les dimensions des cloisons peuvent évoluer en fonction de la taille du cadre à équiper.

La structure du pivot ainsi que des cloisons est constituée d'une armature textile composée de fibres bidirectionnelles et unidirectionnelles de même type que celles constituant le reste de la fourche.

Une préforme est réalisée et mise en place dans un outillage aux dimensions définitives de la pièce. Les fibres peuvent être pré-imprégnées de résine. L'opération de moulage a lieu ensuite. Si les fibres ne sont pas pré-imprégnées, une résine (époxy, polyester, ou équivalent) est injectée à travers le moule. La résine imprègne la totalité de la structure assurant ainsi la liaison de tous les constituants. La polymérisation est effectuée par mise en température de l'ensemble (en fonction du type de résine utilisé).

Après refroidissement, on procède au démoulage de la fourche.

La fabrication de la fourche pourra être effectuée en une seule opération de moulage comprenant le pivot, l'insert, la tête de fourche, les fourreaux et les pattes.

L'invention consiste, mises à part les dispositions exposées ci-dessus, en un certain nombre d'autres dispositions dont il sera plus explicitement question ci-après à propos d'un exemple de réalisation décrit avec référence aux dessins ci-annexés, mais qui n'est nullement limitatif.

La Figure 1 de ces dessins est une vue en élévation d'une fourche de bicyclette.

La Figure 2 montre en demi-coupe axiale verticale, et en demi-vue extérieure, un pivot de fourche selon l'invention et une tête de fourche liée à ce pivot.

La Figure 3 est une coupe du pivot suivant la ligne III-III de la Figure 2.

La Figure 4 est une vue schématique en élévation d'un mandrin pour la fabrication du pivot selon l'invention.

La Figure 5 est une coupe suivant la ligne V-V de la Figure 4.

La Figure 6 montre, semblablement à la Figure 4, le mandrin dont un premier secteur est habillé par des nappes de fibres.

La Figure 7 montre, semblablement à la Figure 6, le mandrin dont tous les secteurs ont été habillés de nappes de fibres pour réaliser les cloisons internes.

La Figure 8 montre, semblablement à la Figure 7, le mandrin enveloppé par des nappes de fibres entourant les secteurs préalablement réalisés.

La Figure 9 montre, semblablement à la Figure 8, le mandrin sur l'extrémité gauche duquel a été confectionné, en matériau composite, un insert en U pour la liaison avec la tête de fourche.

La Figure 10, enfin, est une vue schématique en perspective de la partie inférieure d'un moule destiné à recevoir le mandrin avec la préforme de la Figure 9, pour l'opération de moulage avec injection de résine.

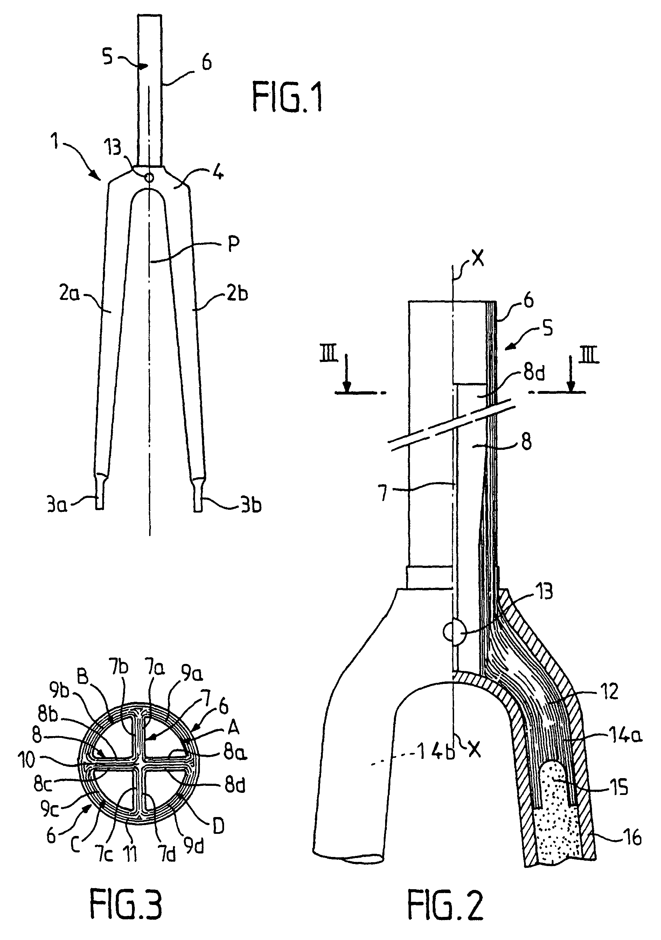

En se reportant à la Figure 1 on peut voir une fourche de bicyclette 1 comprenant deux fourreaux 2a, 2b munis, à leur extrémité inférieure, de pattes 3a, 3b pour la fixation de l'axe de la roue avant qui passe entre les fourreaux. Une tête de fourche 4 située en partie haute réunit les fourreaux, et un pivot tubulaire 5 est lié rigidement à la tête 4.

Le plan médiateur P de la fourche 1 coïncide avec le plan moyen de la roue avant, et définit le plan de roulement de la bicyclette.

Le pivot tubulaire 5 comporte une paroi cylindrique 6 admettant un axe géométrique longitudinal X-X situé dans le plan P.

Le pivot 5 est réalisé en un matériau composite, notamment constitué de fibres de carbone noyées dans une résine, du type époxy ou du type polyester, ou analogue, polymérisée.

Comme visible sur Fig.2 et Fig.3, le pivot 5 est cloisonné et comporte, dans l'exemple représenté, une cloison longitudinale interne 7 s'étendant suivant un diamètre dans le plan de roulement P de la bicyclette; cette cloison 7 est chargée de reprendre les contraintes frontales. Le pivot 5 comporte aussi une cloison diamétrale 8 perpendiculaire à la cloison 7 chargée de reprendre les contraintes latérales.

Les cloisons diamétrales 7 et 8 en croix sont avantageusement formées par huit cloisons radiales internes de renforcement 7a, 7b, 7c, 7d ; 8a, 8b, 8c, 8d réparties à 90° autour de l'axe géométrique X-X et s'étendant sensiblement entre cet axe et la paroi cylindrique 6. Les cloisons 7a, 7b, ...8c, 8d sont liées entre elles par la résine dans la zone de l'axe géométrique longitudinal X-X.

Deux cloisons radiales telles que 7a, 8a, écartées angulairement de 90°, constituent les faces sensiblement planes d'un prisme élémentaire à section transversale en forme de secteur circulaire A, en quart de cercle. Ce prisme présente une face extérieure convexe 9a. La section du prisme peut être creuse, ou remplie d'une mousse ou d'un noyau à basse densité.

Trois autres secteurs en angle droit B, C, D sont formés de manière semblable au secteur A.

Chaque prisme élémentaire est constitué par une armature textile obtenue avec des nappes de fibres enroulées suivant le contour du secteur A, B, C, D associé . Les quatre prismes élémentaires sont juxtaposés pour reconstituer un cercle en section transversale.

Les cloisons radiales sont sensiblement diamétralement opposées et alignées deux à deux; par exemple la cloison 7a est alignée avec 7d, la cloison 7b avec 7c. Deux parois radiales alignées forment une cloison diamétrale élémentaire. Dans l'exemple considéré, la cloison 7 est formée par deux cloisons diamétrales élémentaires juxtaposées, constituées par les cloisons radiales 7a, 7d d'une part et les cloisons 7b, 7c d'autre part. Il en est de même pour la cloison transversale 8.

On voit ainsi que l'armature textile, par exemple pour le secteur A, suit le contour extérieur de ce secteur, et contribue à former la cloison radiale 7a , la cloison radiale 8a et l'arc convexe 9a; des arrondis sont formés à chaque angle du secteur .

Il existe ainsi, au centre de la croix formée par les parois 7 et 8, un espace 10 sensiblement en forme de losange à côtés curvilignes concaves vers l'extérieur qui n'est pas traversé par des nappes du matériau composite. L'espace 10 est rempli de résine.

Grâce à cette disposition, les cloisons 7a, ..8d, peuvent être continues suivant toute la longueur, sans interruption provoquée par une autre cloison à angle droit qui les traverserait.

Le groupe des quatre secteurs ainsi formés est enveloppé par un enroulement cylindrique extérieur 11 de nappes de fibres, suivant un contour circulaire complet constituant une sorte de ceinture.

Sur la Figure 2, les cloisons longitudinales 7 et 8 ont été représentées essentiellement en extérieur.

Le pivot 5 peut être fabriqué séparément, indépendamment d'un insert en U retourné pour la liaison avec la tête de fourche. Dans ce cas, l'extrémité inférieure du pivot pourrait être assemblée à un insert métallique du même type que celui de FR-B-2 684 062. L'extrémité du pivot en matériau composite serait alors emmanchée serrée dans un logement de l'insert et collée à la paroi de ce logement.

Dans l'exemple de réalisation de la Figure 2, le pivot 5 est solidaire d'un insert 12 également en matériau composite, en forme de U retourné. Le pivot 5 et l'insert 12 sont réalisés au cours d'une même opération. L'insert 12 peut être entièrement rempli de fibres, ou être cloisonné comme le pivot. De préférence, chaque branche du U de l'insert 12 présente une section transversale semblable à celle de la Figure 3 avec deux cloisons en croix à angle droit, l'une des cloisons étant parallèle au plan de roulement P, l'autre cloison étant orthogonale à ce plan. Sur la Figure 2 on a représenté schématiquement des fibres du matériau composite assurant une liaison avec le pivot 5.

L'extrémité inférieure du pivot 5 est traversée par un trou 13 dont l'axe est orthogonal à l'axe X-X et est situé dans le plan médiateur P de la fourche. Ce trou 13 reçoit un écrou noyé pour un axe support d'étrier de frein.

L'insert 12 comporte deux branches 14a, 14b tournées vers le bas et reliées par la base du U retourné. Chaque branche 14a, 14b comporte un évidement s'ouvrant vers le bas dans lequel est engagée l'extrémité correspondante 15 d'un noyau du fourreau de fourche correspondant. Chaque noyau est entouré par une couche de matériau composite 16 enveloppant l'insert 12 , y compris la base reliant les branches 14a, 14b.

L'assemblage du pivot 5, muni de l'insert 12, avec les fourreaux de la fourche a lieu lors d'une opération ultérieure.

On pourrait cependant fabriquer en une seule opération la totalité de la fourche avec pivot, insert, fourreaux et pattes.

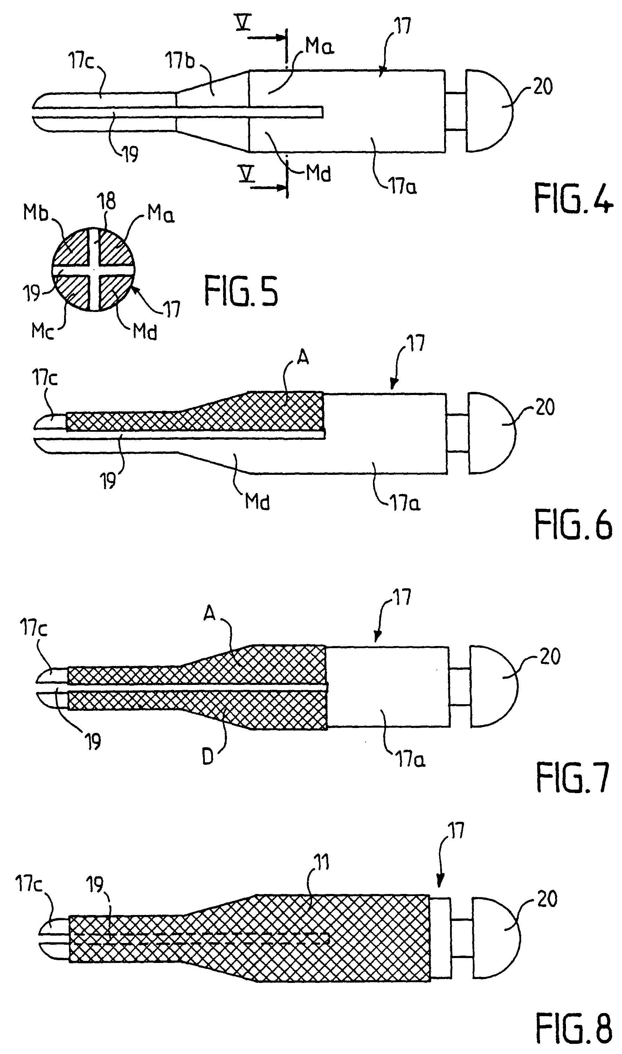

La fabrication du pivot 5 est effectuée avantageusement autour d'un mandrin 17 (Fig.4), par exemple métallique, comportant sur une partie de sa longueur deux fentes longitudinales diamétrales 18, 19 à angle droit.

Le mandrin 17 comprend un corps cylindrique 17a muni, à son extrémité droite selon Fig.4, d'une poignée 20. Le corps cylindrique 17a se prolonge, vers la gauche selon Fig.4, par une partie tronconique 17b de diamètre décroissant, elle-même prolongée par un nez cylindrique 17c de section plus faible que celle du corps 17a.

Les fentes 18, 19 débouchent à l'extrémité du nez 17c, se poursuivent dans la totalité de la partie tronconique 17b et sur une fraction de la longueur du corps 17a.

Les fentes 18 et 19 déterminent ainsi quatre secteurs en angle droit Ma, Mb, Mc, Md à face extérieure convexe, solidaires entre eux par la partie du corps 17a qui ne comporte pas de fente.

Pour fabriquer le pivot 5, on réalise son armature textile composée de fibres bidirectionnelles et unidirectionnelles comme suit.

On entoure tout d'abord chacun des secteurs Ma...Md du mandrin séparément par un enroulement de nappes de fibres. Pour réaliser cet enroulement, on fait passer la nappe de fibres dans deux parties à angle droit des fentes 18, 19 pour entourer les deux faces planes d'un secteur, Ma par exemple, puis on enroule la nappe contre la face convexe extérieure de ce secteur Ma, pour la faire passer à nouveau par les deux parties à angle droit des fentes 18, 19.

L'enroulement se poursuit sur toute la longueur utile des fentes 18 et 19. La partie tronconique 17b et une fraction du corps 17a sont entourées comme illustré sur Fig.6.

A titre indicatif et non limitatif, la largeur des fentes 18, 19 du mandrin peut être de l'ordre de 2 mm; l'épaisseur des nappes de fibres entourant les secteurs Ma...Md peut être comprise environ entre 0,3 mm et 0,5 mm.

Après que cette opération ait été répétée pour les quatre secteurs Ma... Md, les armatures textiles en présentent la configuration illustrée sur Fig.7. Un espace libre peut demeurer au milieu des fentes 18, 19.

Les cloisons 7, 8 décrites à propos de Fig.3 correspondent aux parties de l'armature textile situées dans les fentes 18, 19.

Les dimensions des fentes 18, 19, notamment leur longueur, peuvent évoluer en fonction de la taille du cadre de bicyclette à équiper.

Les secteurs d'armature textile représentés sur le mandrin sur Fig.7 sont ensuite enveloppés, sur toute leur longueur, par une armature textile, également composée de nappes de fibres à haute résistance, notamment de fibres de carbone. L'enveloppe se poursuit axialement vers la poignée 20 au-delà de l'extrémité des fentes 18, 19, c'est-à-dire au-delà des cloisons 7 et 8. Cette enveloppe 11 en armature textile contribue à la paroi cylindrique extérieure du pivot. La paroi cylindrique peut se prolonger vers le haut, au-delà de l'extrémité supérieure des cloisons 7, 8, comme visible sur Fig.2.

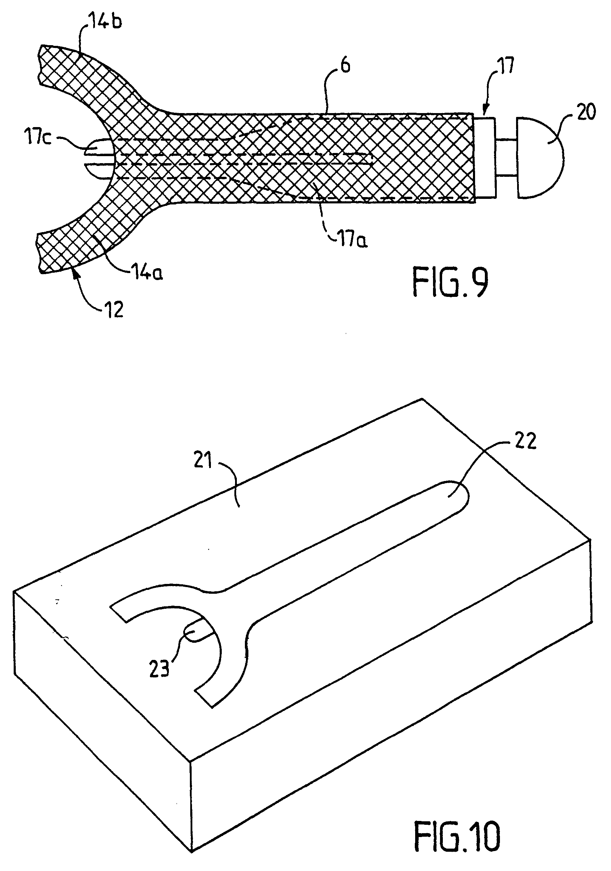

On réalise ensuite l'insert 12, également en matériau composite, en entourant l'armature textile déjà en place sur le nez 17c, comme montré sur Fig.8 . On enveloppe aussi la partie tronconique 17b jusqu'à obtenir une paroi cylindrique extérieure de diamètre sensiblement constant depuis le corps 17a jusqu'au nez 17c comme illustré sur Fig.9 ; les deux branches de l'insert 12 partent de chaque côté, et la pointe du nez 17c reste libre de tout entourage de matériau composite. On obtient ainsi la préforme illustrée sur Fig.9.

Cette préforme est ensuite mise en place dans un moule dont la partie inférieure 21 est représentée sur Fig.10, aux dimensions définitives de la pièce. La partie inférieure du moule 21 comporte une empreinte 22 pour recevoir la préforme de Fig.9, avec un logement 23 pour l'extrémité du nez 17c. Ce logement 23 permet de bien positionner la préforme dans l'empreinte 22.

Le moule est ensuite fermé par une partie supérieure (non représentée) comportant une empreinte complémentaire. L'opération de moulage peut ensuite commencer avec injection d'une résine époxy, polyester etc... à travers le moule par des canaux d'injection non représentés.

La résine imprègne la totalité de l'armature textile du pivot 5 et de l'insert 12 assurant la liaison de tous les constituants.

En variante, la préforme peut être réalisée avec des fibres pré-imprégnées de résine de sorte que la phase d'injection de résine dans le moule, qui vient d'être décrite, n'est plus nécessaire.

La polymérisation de la résine est effectuée par mise en température de l'ensemble du moule et du pivot, en fonction du type de résine utilisé.

Après refroidissement, on procède au démoulage du pivot et de l'insert et on extrait le mandrin 17 par coulissement du côté opposé à l'insert 12. Les cloisons 7, 8 sont formées à l'intérieur de la paroi 6 dans la zone des fentes 18, 19. La réalisation des fourreaux de la fourche et leur assemblage à l'insert 12 et au pivot 5 est réalisée ultérieurement.

En variante, à la place du mandrin 17 extrait en fin de moulage, on peut utiliser un noyau à basse densité, de même fome que le mandrin avec fentes en croix, mais qui reste en place dans le pivot après polymérisation de la résine.

La fabrication de la fourche 1 dans sa totalité peut être effectuée en une seule opération de moulage comprenant le pivot 5, l'insert 12, la tête de fourche 4, les fourreaux 2a, 2b et les pattes 3a,3b.

Quelle que soit la réalisation, la présence de cloisons à l'intérieur du pivot 5 permet, avec un pivot réalisé en matériau composite, d'obtenir des performances de la fourche en matériau composite tout à fait comparables à celles obtenues avec une fourche équipée d'un pivot métallique.

Les cloisons 7, 8 confèrent au pivot 5 une bonne résistance à un serrage radial, comme celui exercé par une potence du type "non filetée".

Bien que les cloisons décrites 7, 8 forment une croix à angle droit, on pourrait prévoir une disposition autre, par exemple trois cloisons radiales espacées de 120° , l'une des cloisons étant dans le plan de roulement et les deux autres symétriques par rapport à ce plan.

## Revendications

1. Pivot tubulaire de fourche de bicyclette comportant une paroi cylindrique admettant un axe géométrique longitudinal (X-X), **caractérisé par le fait qu'**il est réalisé en un matériau composite constitué de fibres à haute résistance mécanique sous forme de nappes et qui ont été noyées, lors d'une opération de moulage, dans une résine qui a durci, et qu'il comporte au moins une cloison longitudinale interne de renforcement (7,8).

2. Pivot selon la revendication 1, **caractérisé par le fait qu'**il comporte une cloison (7) parallèle au plan de roulement (P) de la bicyclette , et une cloison (8) orthogonale à la précédente.

3. Pivot selon la revendication 1 ou 2, **caractérisé par le fait qu'**il comporte au moins une cloison longitudinale (7,8) s'étendant suivant un diamètre.

4. Pivot selon l'une des revendications 1 à 3, **caractérisé par le fait qu'**il comporte plusieurs cloisons longitudinales radiales (7a,7b,7c,7d;8a,8b,8c,8d) réparties angulairement autour de l'axe géométrique (X-X) et s'étendant sensiblement entre cet axe et la paroi cylindrique (6), ces cloisons étant liées entre elles dans la zone de l'axe géométrique longitudinal.

5. Pivot selon la revendication 4, **caractérisé par le fait que** deux cloisons radiales(7a,8a;...;7d,8d) successives constituent les faces sensiblement planes d'un prisme élémentaire à section transversale en forme de secteur circulaire (A,B,C,D), ce prisme ayant une face extérieure convexe (9a,9b,9c,9d).

6. Pivot selon la revendication 5, **caractérisé par le fait que** chaque prisme est constitué par des nappes de fibres enroulées suivant le contour du secteur correspondant (A,B,C,D) .

7. Pivot selon la revendication 5 ou 6, **caractérisé par le fait que** le nombre des cloisons radiales (7a,...8d) est pair, et que les cloisons radiales sont sensiblement diamétralement opposées et alignées deux à deux, un groupe de deux parois radiales ainsi alignées formant une cloison diamétrale.

8. Pivot selon la revendication 7, **caractérisé par le fait qu'**il comporte huit cloisons radiales internes (7a,7b,...8c,8d) formant quatre secteurs circulaires juxtaposés et deux cloisons diamétrales (7,8) en croix.

9. Pivot selon l'une des revendications 5 à 8, **caractérisé par le fait qu'**il comporte un enroulement cylindrique extérieur (11) de nappes de fibres entourant les faces convexes (9a,...,9d) des prismes élémentaires.

10. Pivot selon l'une des revendications précédentes, **caractérisé par le fait qu'**il est solidaire d'un insert (12) en matériau composite , en forme de U retourné, pour liaison avec la tête de fourche , cet insert (12) pouvant comporter également au moins une cloison interne de renforcement.

11. Fourche de bicyclette en matériau composite **caractérisée par le fait qu'**elle est réalisée d'une seule pièce avec un pivot (5) selon l'une des revendications 1 à 10.

12. Procédé de fabrication d'un pivot selon l'une des revendications 1 à 10, **caractérisé par le fait que** l'on utilise un mandrin (17) muni d'au moins une fente longitudinale (18,19), que l'on enroule sur le mandrin des nappes de fibres en passant par chaque fente du mandrin, pour réaliser au moins une cloison longitudinale interne (7,8) et que l'on enveloppe les nappes ainsi formées par des nappes de fibres (11) enroulées autour du mandrin, les fibres pouvant être pré-imprégnées de résine, ou être imprégnées de résine à un stade ultérieur de la fabrication.

13. Procédé de fabrication d'un pivot selon la revendication 12, **caractérisé par le fait que** le mandrin (17) comporte un corps cylindrique (17a) se prolongeant par une partie tronconique (17b) elle même prolongée par un nez cylindrique (17c) de section plus faible que celle du corps (17a) , le nez, la partie tronconique et une partie du corps étant fendus en croix (18,19) de manière à former plusieurs secteurs (Ma,Mb,Mc,Md) prismatiques à face extérieure convexe, solidaires entre eux dans une partie opposée au nez.

14. Procédé de fabrication selon la revendication 13, **caractérisé par le fait que** l'on entoure tout d'abord chacun des secteurs (Ma,Mb,Mc,Md) du mandrin (17) séparément par enroulement de nappes de fibres unidirectionnelles et bidirectionnelles, puis que l'on enroule , sur le mandrin ainsi garni, des nappes de fibres formant une enveloppe extérieure (11), et qu'au niveau du nez on réalise par enroulement supplémentaire de nappes de fibres un insert (12) en forme de U retourné.

15. Mandrin pour la mise en oeuvre du procédé selon l'une des revendications 12 à 14, **caractérisé par le fait qu'**il comporte un corps cylindrique (17a) se prolongeant par une partie tronconique (17b) elle-même prolongée par un nez (17c) de section transversale plus faible que celle du corps , le nez (17c) , la partie tronconique (17b) et une partie du corps (17a) étant fendus en croix de manière à former plusieurs prismes (Ma,Mb,Mc,Md) à face extérieure cylindrique, ces prismes étant solidaires entre eux à l'extrémité éloignée du nez.

## Patentansprüche

1. Schaftrohr der Fahrradgabel mit einer zylindrischen Wand, die eine geometrische Längsachse (X-X) aufweist, **dadurch gekennzeichnet, daß** es aus einem Verbundmaterial gebildet ist, das aus mechanisch hochfesten Fasern in Form von Lagen besteht und die Fasern während eines Formvorgangs in ein Harz getaucht wurden, das aushärtete, und daß es wenigstens eine längsgerichtete innere Verstärkungszwischenwand (7, 8) aufweist.

2. Schaftrohr nach Anspruch 1, **dadurch gekennzeichnet, daß** es eine Zwischenwand (7), die parallel zur Rollebene (P) des Fahrrads verläuft, und eine zu dieser orthogonale Zwischenwand (8) aufweist.

3. Schaftrohr nach Anspruch 1 oder 2, **dadurch gekennzeichnet, daß** es eine längsgerichtete Zwischenwand (7, 8) aufweist, die sich entlang eines Durchmessers erstreckt.

4. Schaftrohr nach einem der Ansprüche 1 bis 3, **dadurch gekennzeichnet, daß** es mehrere längsgerichtete radiale Zwischenwände (7a, 7b, 7c, 7d; 8a, 8b, 8c, 8d) aufweist, die winkelmäßig um die geometrische Achse (X-X) verteilt sind und sich im wesentlichen zwischen dieser Achse und der zylindrischen Wand (6) erstrecken, wobei die Zwischenwände untereinander im Bereich der geometrischen Achse verbunden sind.

5. Schaftrohr nach Anspruch 4, **dadurch gekennzeichnet, daß** zwei aufeinanderfolgende radiale Zwischenwände (7a, 8a; ...; 7d, 8d) die im wesentlichen ebenen Flächen eines elementaren Prismas mit einem kreissektor-förmigen (A, B, C, D) Querschnitt bilden, wobei das Prisma eine konvexe Außenseite (9a, 9b, 9c, 9d) hat.

6. Schaftrohr nach Anspruch 5, **dadurch gekennzeichnet, daß** jedes Prisma aus Faserlagen besteht, die der Kontur des entsprechenden Sektors (A, B, C, D) folgend gewickelt sind.

7. Schaftrohr nach Anspruch 5 oder 6, **dadurch gekennzeichnet, daß** die Zahl der radialen Zwischenwände (7a, ..., 8d) gerade ist, und daß die radialen Zwischenwände einander im wesentlichen diametral gegenüberliegen und paarweise ausgerichtet sind, wobei eine Gruppe derart ausgerichteter radialer Wände eine diametrale Zwischenwand bildet.

8. Schaftrohr nach Anspruch 7, **dadurch gekennzeichnet, daß** es acht innere radiale Zwischenwände (7a, 7b, ..., 8c, 8d) aufweist, die vier aneinanderliegende Kreissektoren und zwei sich kreuzende diametrale Zwischenwände (7, 8) bilden.

9. Schaftrohr nach einem der Ansprüche 5 bis 8, **dadurch gekennzeichnet, daß** es eine äußere zylindrische Wicklung (11) aus Faserlagen aufweist, welche die konvexen Seiten (9a, ..., 9d) der elementaren Prismen umgibt.

10. Schaftrohr nach einem der vorhergehenden Ansprüche, **dadurch gekennzeichnet, daß** es fest mit einem umgekehrt U-förmigen Einsatz (12) aus Verbundmaterial zur Verbindung mit dem Gabelkopf verbunden ist, wobei der Einsatz (12) ebenfalls wenigstens eine innere Verstärkungszwischenwand aufweisen kann.

11. Fahrradgabel aus Verbundmaterial, **dadurch gekennzeichnet, daß** sie aus einem einzelnen Teil mit einem Schaftrohr (5) nach einem de Ansprüche 1 bis 15 besteht.

12. Verfahren zur Herstellung eines Schaftrohrs nach einem der Ansprüche 1 bis 10, **dadurch gekennzeichnet, daß** ein mit wenigstens einem Längsschlitz (18, 19) versehener Dorn (17) verwendet wird, daß auf den Dorn durch jeden Schlitz des Dorns hindurch Faserlagen auf den Dorn gewickelt werden, um wenigstens eine innere längsgerichtete Zwischenwand (7, 8) zu bilden, und daß die derart gebildeten Lagen mit Faserlagen (11) umgeben werden, die um den Dorn gewickelt werden, wobei die Fasern mit Harz vor-imprägniert sein oder in einem späteren Stadium der Herstellung mit Harz imprägniert werden können.

13. Verfahren zur Herstellung eines Schaftrohrs nach Anspruch 12, **dadurch gekennzeichnet, daß** der Dorn (17) einen zylindrischen Körper (17a) aufweist, der durch einen kegelstumpfförmigen Teil (17b) verlängert ist, der seinerseits durch eine zylindrische Nase (17c) mit kleinerem Querschnitt als der Körper (17a) verlängert ist, wobei die Nase, der kegelstumpfförmige Teil und ein Teil des Körpers kreuzförmig (18, 19) geschlitzt sind, um mehrere prismatische Sektoren (Ma, Mb, Mc, Md) mit konvexer Außenseite zu bilden, die miteinander in einem der Nase gegenüberliegenden Bereich fest miteinander verbunden sind.

14. Verfahren zur Herstellung eines Schaftrohrs nach Anspruch 13, **dadurch gekennzeichnet, daß** zunächst jeder der Sektoren (Ma, Mb, Mc, Md) des Dorns (17) separat mit unidirektionalen und bidirektionalen Faserlagen umgibt, anschließend auf den derart verkleideten Dorn Faserlagen gewickelt werden, die eine äußere Hülle (11) bilden, und daß auf der Höhe der Nase durch zusätzliches Aufwickeln von Faserlagen ein Einsatz (12) in Form eines umgekehrten U gebildet wird.

15. Dorn zur Durchführung des Verfahrens nach einem der Ansprüche 12 bis 14, **dadurch gekennzeichnet, daß** er einen zylindrischen Körper (17a) aufweist, der durch einen kegelstumpfförmigen Teil (17b) verlängert ist, der seinerseits durch eine zylindrische Nase (17c) mit kleinerem Querschnitt als der Körper (17a) verlängert ist, wobei die Nase (17c), der kegelstumpfförmige Teil (17b) und ein Teil des Körpers (17a) kreuzförmig geschlitzt sind, um mehrere Prismen (Ma, Mb, Mc, Md) mit konvexer Außenseite zu bilden, die miteinander am von der Nase abgewandten Ende fest miteinander verbunden sind.

## Claims

1. Bicycle fork tubular pivot comprising a cylindrical wall which has a longitudinal geometric axis (X-X), **characterized in that** it is made of a composite material made up of fibres of high mechanical strength, which are in the form of laps and which, during a moulding operation, have been embedded in a resin which has hardened, and comprises at least one longitudinal internal reinforcing partition (7,8).

2. Pivot according to Claim 1, **characterized in that** it comprises a partition (7) parallel to the plane of travel (P) of the bicycle, and a partition (8) orthogonal to the previous one.

3. Pivot according to Claim 1 or 2, **characterized in that** it comprises at least one longitudinal partition (7,8) extending along a diameter.

4. Pivot according to one of Claims 1 to 3, **characterized in that** it comprises several longitudinal radial partitions (7a,7b,7c,7d;8a,8b,8c,8d) distributed angularly about the geometric axis (X-X) and extending approximately between this axis and the cylindrical wall (6), these partitions being linked together in the region of the longitudinal geometric axis.

5. Pivot according to Claim 4, **characterized in that** two successive radial partitions (7a,8a;...;7d,8d) constitute the approximately flat faces of an elemental prism, the cross section of which is in the shape of a circular sector (A,B,C,D), this prism having a convex outer face (9a,9b,9c,9d).

6. Pivot according to Claim 5, **characterized in that** each prism consists of laps of fibres wound around the contour of the corresponding sector (A,B,C,D).

7. Pivot according to Claim 5 or 6, **characterized in that** the number of radial partitions (7a,...,8d) is an even number, and that the radial partitions are approximately diametrically opposed and aligned in pairs, a group of two radial walls thus aligned forming a diametral partition.

8. Pivot according to Claim 7, **characterized in that** it comprises eight radial internal partitions (7a,7b,...8c,8d) forming four juxtaposed circular sectors and two diametral partitions (7,8) in a cross configuration.

9. Pivot according to one of Claims 5 to 8, **characterized in that** it comprises an outer cylindrical winding (11) of laps of fibres surrounding the convex faces (9a,...,9d) of the elemental prisms.

10. Pivot according to one of the preceding claims, **characterized in that** it is secured to an insert (12) made of composite material, in the shape of an inverted U, for connecting to the fork crown, it being possible for this insert (12) also to comprise at least one internal reinforcing partition.

11. Bicycle fork made of composite material, **characterized in that** it is made as one piece with a pivot (5) according to one of Claims 1 to 10.

12. Method for manufacturing a pivot according to one of Claims 1 to 10, **characterized in that** use is made of a mandrel (17) which has at least one longitudinal slit (18,19), that laps of fibres are wound around the mandrel, passing through each slit in the mandrel, to produce at least one longitudinal internal partition (7,8), and that the laps thus formed are enveloped with laps of fibres (11) wound around the mandrel, it being possible for the fibres to be preimpregnated with resin, or impregnated with resin at a later stage in the manufacture.

13. Method for manufacturing a pivot according to Claim 12, **characterized in that** the mandrel (17) comprises a cylindrical body (17a), extended by a frustoconical part (17b) itself extended by a cylindrical snout (17c) with a smaller cross section than the body (17a), the snout, the frustoconical part and part of the body being split into a cross shape (18,19) so as to form several prismatic sectors (Ma,Mb,Mc,Md) with a convex outer face, secured together in a region away from the snout.

14. Method of manufacture according to Claim 13, **characterized in that** each of the sectors (Ma,Mb,Mc,Md) of the mandrel (17) is first of all surrounded separately with a winding of one-way and two-way fibre laps, then the mandrel thus covered is wound with laps of fibres forming an outer envelope (11), and then an insert (12) in the shape of an inverted U is formed in the snout region by an additional winding of laps of fibres.

15. Mandrel for implementing the method according to one of Claims 12 to 14, **characterized in that** it comprises a cylindrical body (17a) extended by a frustoconical part (17b) itself extended by a snout (17c) with a smaller cross section than the body, the snout (17c), the frustoconical part (17b) and part of the body (17a) being split into a cross shape so as to form several prisms (Ma,Mb,Mc,Md) with a cylindrical outer face, these prisms being secured together at the end farthest from the snout.
